# FASCICULE DE BREVET EUROPEEN

(11) **EP 1 544 101 B1**
(45) Date de publication et mention de la délivrance du brevet: **10.05.2006**
(21) Numéro de dépôt: 04292845.7
(22) Date de dépôt: 01.12.2004
(51) Int. Cl.: B64C 9/04

(54) **Procédé pour améliorer la manoeuvrabilité d'un aéronef lors d'une ressource**
Verfahren zum Verbessern der Manövrierbarkeit eines Flugzeuges während des Übergangs in den Steigflug
Method for ameliorating the maneuverability of an aircraft during pitch up

(30) Priorité: 19.12.2003 FR 0314952
(43) Date de publication de la demande: 22.06.2005
(73) Titulaire: AIRBUS France, 31060 Toulouse (FR)
(72) Inventeur: Boe, Régis, 31490 Leguevin (FR); Sauvinet, Frédéric, 31170 Tournefeuille (FR)
(74) Mandataire: Bonnetat, Christian

(56) Documents cités:
- US-A- 4 034 334
- US-A- 4 825 375
- US-A- 5 002 240

## Description

La présente invention concerne un procédé pour améliorer la manoeuvrabilité d'un aéronef lors d'une ressource.

On sait que certains aéronefs comportent un empennage horizontal stabilisateur, réglable en inclinaison cf US 4 825 375. Un tel empennage horizontal réglable est, dans la technique, désigné par l'une ou l'autre des abréviations PHR (pour Plan Horizontal Réglable) ou THS (pour Trimmable Horizontal Stabiliser). Tout comme un empennage horizontal fixe, un empennage horizontal réglable est pourvu de gouvernes de profondeur formant le bord de fuite dudit empennage horizontal réglable.

Un empennage horizontal réglable peut être braqué dans le sens à cabrer ou à piquer et il est utilisé dans certaines phases de vol. Par exemple, en vol de croisière horizontal, lesdites gouvernes de profondeur sont disposées dans le prolongement aérodynamique dudit empennage horizontal réglable et l'ensemble oscille en continu, lentement et avec une faible amplitude, autour de la position d'inclinaison nulle pour contrer tout moment de tangage non désiré appliqué audit aéronef.

Quelle que soit la phase de vol dans laquelle se trouve l'aéronef, le pilote peut être obligé de commander une ressource, par exemple lors de la phase d'accélération à basse altitude après le décollage ou en vol pour éviter un obstacle, tel qu'un autre aéronef, une montagne, etc ... Dans ce cas, les gouvernes de profondeur attachées à l'empennage horizontal réglable sont commandées par le pilote de l'aéronef pour prendre une position à cabrer qui correspond à une fraction importante, sinon à la totalité, du débattement à cabrer desdites gouvernes.

On comprendra aisément que, notamment dans le cas où la masse de l'aéronef est élevée, la manoeuvrabilité de l'aéronef soit insuffisante pour permettre une telle ressource.

Bien entendu, pour résoudre un tel problème, on pourrait penser à augmenter la puissance du système d'actionnement desdites gouvernes de profondeur et/ou la surface des dernières. Mais alors, il en résulterait une augmentation des masses et des coûts pour l'aéronef.

La présente invention a pour objet de remédier à ces inconvénients.

A cette fin, selon l'invention, le procédé pour améliorer la manoeuvrabilité d'un aéronef lors d'une ressource, ledit aéronef comportant un empennage horizontal réglable auquel sont articulées des gouvernes de profondeur et se trouvant dans une phase de vol dans laquelle lesdites gouvernes de profondeur sont disposées dans le prolongement aérodynamique dudit empennage horizontal réglable, est remarquable en ce que, préalablement au déploiement desdites gouvernes de profondeur pour la ressource :
- on braque ledit empennage horizontal réglable, dans le sens à cabrer ; et
- on braque lesdites gouvernes de profondeur dans le sens à piquer, de façon que la combinaison de l'action à cabrer dudit empennage horizontal réglable et de l'action à piquer desdites gouvernes de profondeur engendre une force aérodynamique résultante qui est au moins approximativement égale à celle engendrée par l'ensemble dudit empennage horizontale réglable et desdites gouvernes de profondeur dans ladite phase de vol précédant la ressource.

Ainsi, grâce à la présente invention, pour une action aérodynamique précédant la ressource équivalente à celle prévalant dans ladite phase de vol précédant la ressource, on décale vers les valeurs à piquer la position des gouvernes de profondeur à partir de laquelle s'effectuera le braquage de celles-ci au moment de la ressource, ce qui augmente la manoeuvrabilité de l'aéronef. Par ailleurs, la course de braquage à cabrer desdites gouvernes de profondeur par rapport audit empennage horizontal réglable étant réduite, on obtient une diminution des charges appliquées sur lesdites gouvernes de profondeur au moment de la ressource.

Le procédé de l'invention s'applique à n'importe quelle phase de vol précédant la ressource. Si cette phase de vol est un vol de croisière horizontal au cours duquel ledit empennage horizontal réglable et ses gouvernes de profondeur engendrent une force de tangage quasiment nulle, on fait en sorte que ladite force aérodynamique résultante soit elle-même au moins approximativement nulle.

Les figures du dessin annexé feront bien comprendre comment l'invention peut être réalisée. Sur ces figures, des références identiques désignent des éléments semblables.

La figure 1 montre, en perspective schématique, un aéronef civil gros porteur pourvu d'un empennage horizontal réglable.

La figure 2 illustre schématiquement trois positions successives dudit aéronef, incluant le début de la ressource.

Les figures 3A et 3B illustrent, à titre d'exemple schématique, le positionnement usuel de l'empennage horizontal réglable et des gouvernes de profondeur qui y sont attachées, respectivement en vol de croisière et à partir du début de la ressource.

Les figures 4A et 4B montrent schématiquement, à titre de comparaison avec l'exemple des figures 3A et 3B, un exemple de positionnement, conforme à l'invention, de l'empennage horizontal réglable et des gouvernes de profondeur, respectivement avant et à partir du début de la ressource, la phase de départ de la ressource étant la croisière.

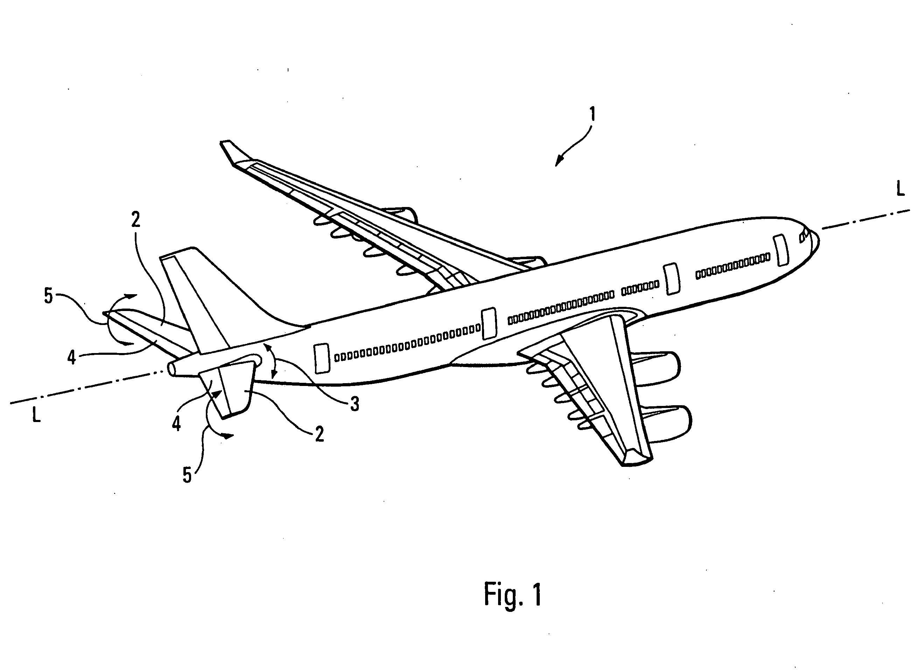

L'avion gros porteur 1, montré schématiquement par la figure 1, présente un axe longitudinal L-L et comporte un empennage horizontal 2 réglable en inclinaison, comme cela est illustré par la double flèche 3. Au bord arrière dudit empennage horizontal réglable 2, sont articulées des gouvernes de profondeur 4 pouvant tourner par rapport audit empennage 2, comme cela est illustré par les doubles flèches 5.

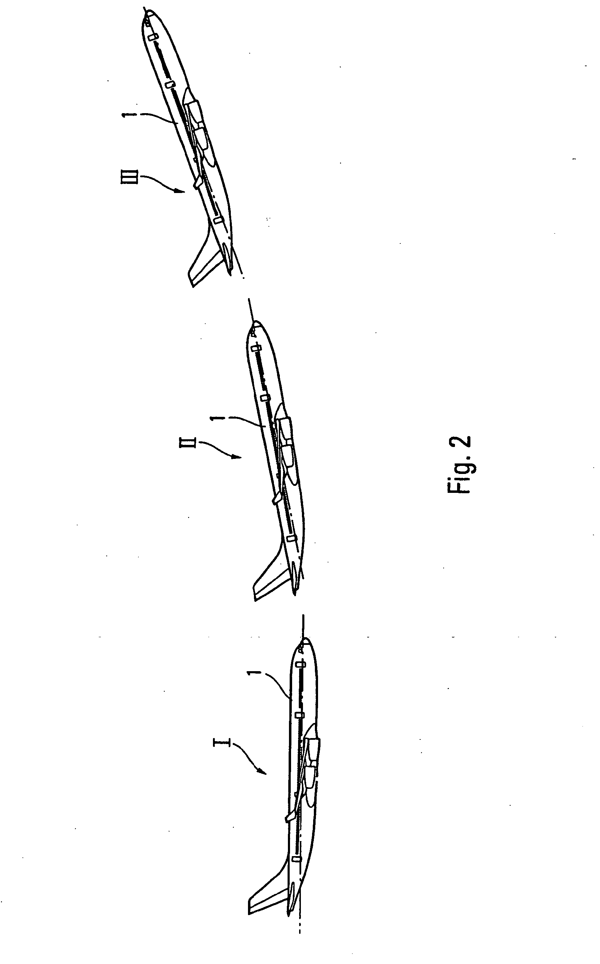

Sur la figure 2, on a illustré trois situations I, II et III que connaît ledit avion 1 lors d'une ressource.

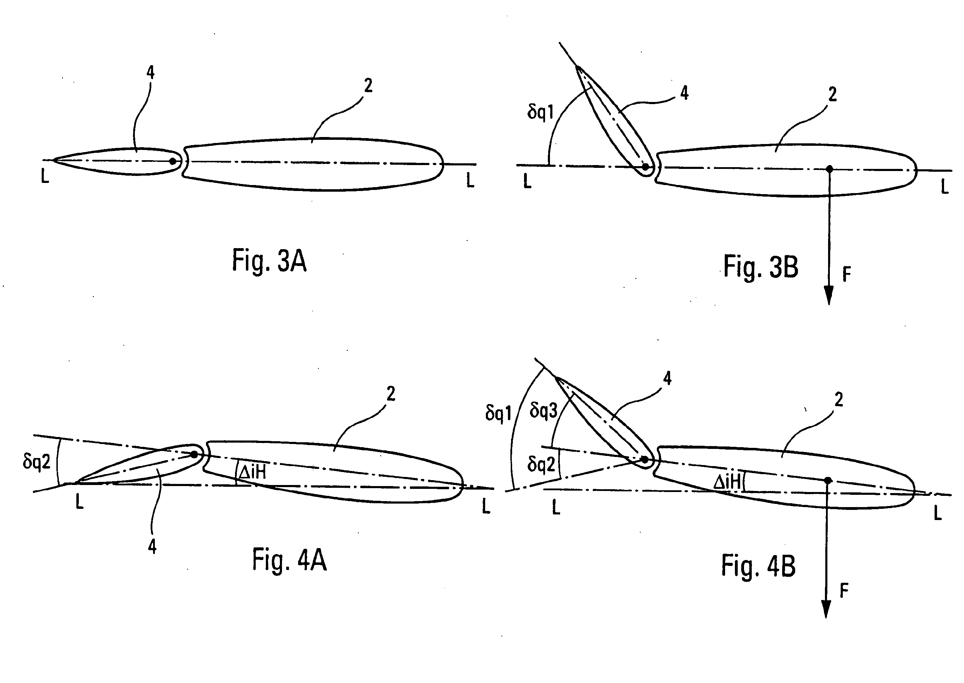

Dans la situation I, l'avion 1 vole en croisière avec son empennage horizontal réglable 2 à inclinaison nulle ou quasiment nulle et avec les gouvernes de profondeur 4 en prolongement aérodynamique dudit empennage horizontal réglable 2 (voir la figure 3A). Dans cette configuration usuelle, l'ensemble dudit empennage horizontal réglable 2 et des gouvernes de profondeur 4 n'engendre quasiment aucune force aérodynamique de tangage.

Toujours de façon usuelle, lorsque l'avion 1 doit effectuer une ressource (situation II sur la figure 2), le pilote actionne les gouvernes de profondeur 4 pour leur faire prendre une position à cabrer, définie par un angle de débattement δq1 par rapport à l'empennage horizontal réglable 2 (voir la figure 3B). L'ensemble dudit empennage horizontal réglable 2 et des gouvernes 4 engendre alors une force aérodynamique à cabrer F produisant un moment de tangage à cabrer.

Après amorçage de la ressource et stabilisation de l'avion sur une trajectoire inclinée (situation III sur la figure 2), les gouvernes de profondeur 4 sont ramenées en prolongement aérodynamique dudit empennage 2.

Comme mentionné ci-dessus, surtout si la masse de l'avion 1 est élevée, celui-ci peut manquer de manoeuvrabilité pour faire passer les gouvernes de profondeur 4 de leur position de la figure 3A à leur position de déploiement de la figure 3B.

Pour remédier à cet inconvénient, la présente invention opère de la façon illustrée sur les figures 4A et 4B, à savoir :
- pendant le vol de croisière illustré par la situation I de la figure 2 et préalablement à la ressource, l'empennage horizontal réglable 2 est incliné d'un angle à cabrer ΔiH, et
- simultanément, les gouvernes de profondeur 4 sont braquées en sens inverse de l'empennage horizontal réglable 2, c'est-à-dire dans le sens à piquer, pour prendre un angle à piquer δq2 par rapport audit empennage 2.

Dans ce processus, illustré par la figure 4A, les angles ΔiH et δq2 sont choisis pour que la force aérodynamique engendrée par la combinaison de l'empennage horizontal réglable 2 et des gouvernes de profondeur 4 soit nulle ou quasiment nulle, comme dans la configuration de la figure 3A.

Il résulte de ce qui précède que, lorsque les gouvernes de profondeur 4 sont braquées à cabrer, lors de la ressource, du débattement angulaire δq1 afin d'engendrer la force aérodynamique à cabrer F (voir la figure 4B), la partie initiale d'amplitude δq2 de ce braquage s'effectue aisément et sans contrainte. De plus, par rapport à l'empennage horizontal réglable, lesdites gouvernes de profondeur 4 ne subissent qu'un braquage maximal δq3 égal à la différence δq1-δq2.

Ainsi, dans la configuration conforme à la présente invention illustrée par les figures 4A et 4B, lors de la ressource, la manoeuvrabilité de l'avion 1 est améliorée et les gouvernes de profondeur 4 subissent des charges aérodynamiques inférieures à celles auxquelles elles sont soumises dans la configuration usuelle des figures 3A et 3B.

## Revendications

1. Procédé pour améliorer la manoeuvrabilité d'un aéronef (1) lors d'une ressource, ledit aéronef (1) comportant un empennage horizontal réglable (2) auquel sont articulées des gouvernes de profondeur (4) et se trouvant dans une phase de vol dans laquelle lesdites gouvernes de profondeur (4) sont disposées dans le prolongement aérodynamique dudit empennage horizontal réglable (2),
**caractérisé en ce que**, préalablement au déploiement desdites gouvernes de profondeur (4) pour la ressource :
- on braque ledit empennage horizontal réglable (2), dans le sens à cabrer ; et
- on braque lesdites gouvernes de profondeur (4) dans le sens à piquer, de façon que la combinaison de l'action à cabrer dudit empennage horizontal réglable (2) et de l'action à piquer desdites gouvernes de profondeur (4) engendre une force aérodynamique résultante qui est au moins approximativement égale à celle engendrée par l'ensemble dudit empennage horizontale réglable (2) et desdites gouvernes de profondeur (4) dans la phase de vol précédant la ressource.

2. Procédé selon la revendication 1, dans lequel la phase de vol précédant la ressource est un vol de croisière,
**caractérisé en ce que** ladite force aérodynamique résultante est au moins approximativement nulle.

## Patentansprüche

1. Verfahren zum Verbessern der Manövrierbarkeit eines Flugzeugs (1) während des Übergangs in den Steigflug, wobei das Flugzeug (1) ein verstellbares Höhenleitwerk (2) aufweist, an dem Höhenruder (4) angelenkt sind, und sich in einer Flugphase befindet, in der die Höhenruder (4) in aerodynamischer Verlängerung des verstellbaren Höhenleitwerks (2) stehen, **dadurch gekennzeichnet, dass** man vor dem Auslenken der Höhenruder (4) für den Übergang in den Steigflug:
- das verstellbare Höhenleitwerk (2) in Höhentrimmungsrichtung ausrichtet; und
- die Höhenruder (4) in Tiefentrimmungsrichtung ausrichtet, so dass die Kombination aus der Höhentrimmung durch das verstellbare Höhenleitwerk (2) und der Tiefentrimmung durch die Höhenruder (4) eine aerodynamische Mittelkraft erzeugt, die wenigstens annähernd gleich jener Kraft ist, die von der Gesamtkonstruktion des verstellbaren Höhenleitwerks (2) und der Höhenruder (4) in der Flugphase vor dem Übergang in den Steigflug erzeugt wird.

2. Verfahren nach Anspruch 1, bei dem die Flugphase, die dem Übergang in den Steigflug vorhergeht, ein Reiseflug ist,
**dadurch gekennzeichnet, dass** die aerodynamische Mittelkraft wenigstens annähernd null beträgt.

## Claims

1. A process for improving the maneuverability of an aircraft (1) during a resource, said aircraft (1) comprising an adjustable horizontal tailplane (2) to which are hinged elevators (4) and being in a flight phase in which said elevators (4) are disposed in direct aerodynamic alignment with said adjustable horizontal tailplane (2),
**characterized in that** prior to the deployment of said elevators (4) in respect of the resource:
- said adjustable horizontal tailplane (2) is deflected, in the nose-up direction; and
- said elevators (4) are deflected in the nose-down direction, in such a way that the combination of the nose-up action of said adjustable horizontal tailplane (2) and of the nose-down action of said elevators (4) engenders a resultant aerodynamic force which is at least approximately equal to that engendered by the assembly of said adjustable horizontal tailplane (2) and of said elevators (4) in the flight phase preceding the resource.

2. The process as claimed in claim 1, in which the flight phase preceding the resource is a cruising flight,
**characterized in that** said resultant aerodynamic force is at least approximately zero.
